(19) **Europäisches Patentamt / European Patent Office / Office européen des brevets**

(11) **EP 2 922 713 B1**

(12) **FASCICULE DE BREVET EUROPEEN**

(45) Date de publication et mention de la délivrance du brevet:
**02.08.2017 Bulletin 2017/31**

(21) Numéro de dépôt: **13779831.0**

(22) Date de dépôt: **21.10.2013**

(51) Int Cl.:
***B60C 23/04*** *(2006.01)*

(86) Numéro de dépôt international:
**PCT/EP2013/071971**

(87) Numéro de publication internationale:
**WO 2014/079633 (30.05.2014 Gazette 2014/22)**

(54) **SYSTEME DE SURVEILLANCE DE PRESSION DES PNEUMATIQUES D'UN VEHICULE AUTOMOBILE**

VORRICHTUNG ZUR REIFENDRUCKÜBERWACHUNG

TIRE PRESSURE MONITORING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2012 FR 1261178**

(43) Date de publication de la demande:
**30.09.2015 Bulletin 2015/40**

(73) Titulaire: **Renault S.A.S.**
**92100 Boulogne-Billancourt (FR)**

(72) Inventeurs:
- **SAINT-LOUP, Philippe**
  **F-78760 Jouars Pontchartrain (FR)**
- **MONTI, Alessandro**
  **F-92250 La Garenne Colombes (FR)**
- **GUILLEREY, Bernard**
  **F-78180 Montigny Le Bretoneux (FR)**

(56) Documents cités:
**EP-A2- 1 236 588      EP-A2- 1 284 204**
**WO-A2-2007/012771      FR-A1- 2 962 939**
**US-A1- 2008 061 625**

## Description

L'invention a pour domaine technique la surveillance d'un véhicule automobile et plus particulièrement la surveillance de la pression des pneumatiques d'un tel véhicule.

Une nouvelle règlementation européenne impose à tous les constructeurs automobiles d'équiper leurs véhicules d'une surveillance de la pression des pneumatiques.

Bien qu'il existe des moyens de mesure de la pression des pneumatiques, il n'existe pas de moyen de surveillance de la pression permettant de déterminer des états autres qu'une crevaison. Ainsi, les véhicules existants munis de moyens de mesure de la pression des pneumatiques disposent généralement d'une simple alerte du conducteur lorsque la valeur mesurée diminue en dessous d'une valeur de seuil.

De l'état de la technique, on connaît les documents suivants.

Le document FR 2916564 divulgue la localisation de la position des roues en utilisant des moyens radiofréquences comprenant des capteurs émetteurs avec une antenne réceptrice et une excitation à basse fréquence. Cela permet par la suite de relier les informations de pressions mesurées à la bonne roue.

Le document FR 2844748 divulgue un système de contrôle de la pression des pneumatiques des roues d'un véhicule automobile. Plus particulièrement, ce document permet de localiser la position des roues en utilisant des moyens de radiofréquence comprenant une comparaison de la signature fréquentielle d'informations de pression avec celles des informations de vitesse des roues issues de l'ABS, ESP (pour Electronic Stability Program) ou autre dispositif. Cela permet par la suite de relier les informations de pressions mesurées à la bonne roue.

Le document GB 2443302 divulgue également la localisation de la position des roues en utilisant des moyens de radio fréquence comprenant des capteurs émetteurs et des antennes réceptrices correspondantes. Cela permet par la suite de relier les informations de pressions mesurées à la bonne roue. Le document WO 2007012771 A2 divulgue également un système d'évaluation de l'état d'un pneumatique, faisant intervenir une procédure de fusion de mesures, en accord avec les préambules respectifs des revendications 1 et 6. Il existe ainsi un besoin pour un système de surveillance de la pression des pneumatiques d'un véhicule automobile apte à déterminer l'état des pneumatiques en fonction d'un ensemble de mesures et de valeurs estimées relatives aux pneumatiques de sorte à en informer le conducteur ainsi que les autres systèmes de commande du véhicule fonctionnant en relation avec les pneumatiques.

Un objet de l'invention est un système de surveillance de pression des pneumatiques d'un véhicule automobile comprenant au moins un capteur situé dans au moins un pneumatique. Le système de surveillance comprenant également un moyen principal apte à déterminer un état de chaque pneumatique muni d'un capteur, parmi une crevaison, un sous-gonflage et une pression inadaptée aux hautes vitesses, en fonction de la comparaison de la pression de chaque pneumatique avec des seuils de pression relatifs à chaque état.

Le moyen principal peut comprendre au moins un moyen de détermination d'une alerte pour chaque état, chaque moyen de détermination d'une alerte comprenant un moyen de comptage d'habilitation et un moyen de comptage de réhabilitation, tous deux connectés en entrée aux capteurs de roues et à un moyen de détermination des seuils de pression, et en sortie à un moyen d'estimation d'une alerte, le moyen de comptage d'habilitation et le moyen de comptage de réhabilitation étant aptes chacun à incrémenter ou réduire un compteur en fonction de règles prédéterminées de comparaison de la pression du pneumatique et des seuils de pression, le moyen d'estimation d'une alerte étant apte à émettre une alerte en fonction de la comparaison des valeurs du moyen de comptage d'habilitation et du moyen de comptage de réhabilitation à des valeurs prédéterminées.

Le moyen de détermination des seuils de pression peut être apte à déterminer au moins un seuil de pression pour chaque état, en fonction d'une température de référence et d'une pression de référence prédéterminées.

Le moyen de détermination des seuils de pression peut également être apte à corriger lesdits seuils de pression en fonction d'une mesure de la température du pneumatique.

Le système de surveillance peut comprendre un moyen de détection des identifiants des roues et un moyen d'association des informations aux roues, aptes à associer les informations reçues des capteurs avec la roue correspondante.

Le moyen de comptage d'habilitation et le moyen de comptage de réhabilitation peuvent être communs à au moins deux moyens de détermination d'une alerte.

Un autre objet de l'invention est un procédé de surveillance de pression des pneumatiques d'un véhicule automobile, comprenant les étapes suivantes :

on mesure la pression d'au moins un pneumatique,
on détermine un état de chaque pneumatique parmi une crevaison, un sous-gonflage et une pression inadaptée aux hautes vitesses en fonction de la comparaison de la pression de chaque pneumatique avec des seuils de pression relatifs à chaque état, et
on émet une alerte, si l'un des états est vérifié.

Pour chaque état, on peut déterminer des seuils de pression correspondant chacun à une graduation de l'état de la pression dans le pneumatique, on peut incrémenter ou on réduit un compteur d'habilitation et un compteur de réhabilitation en comparant les pressions de pneumatiques aux différents seuils de pression déterminés, et on peut déterminer une alerte liée à un état d'un pneumatique en fonction de la comparaison des valeurs du compteur d'habilitation et du compteur de réhabilitation à des valeurs prédéterminées.

On peut déterminer des seuils de pression en prenant en compte la valeur maximale entre la valeur issue d'une composante fixe et la valeur issue d'une composante variable.

La composante fixe peut correspondre à un seuil minimum en valeur absolue.

La composante variable peut correspondre à un pourcentage d'une pression recommandée à une température de référence.

On peut corriger les seuils de pression en fonction de la température associée à la pression mesurée ou estimée des pneumatiques.

On peut déterminer des états transitoires entre des états d'alerte en fonction des valeurs du compteur d'habilitation et du compteur de réhabilitation et de règles prédéfinies.

D'autres buts, caractéristiques et avantages apparaîtront à la lecture de la description suivante donnée uniquement en tant qu'exemple non limitatif et faite en référence aux figures annexées sur lesquelles :

- la figure 1 illustre les principaux éléments d'un véhicule automobile muni d'un système de surveillance de pression des pneumatiques, et
- la figure 2 illustre les principaux éléments d'un système de surveillance de pression des pneumatiques.

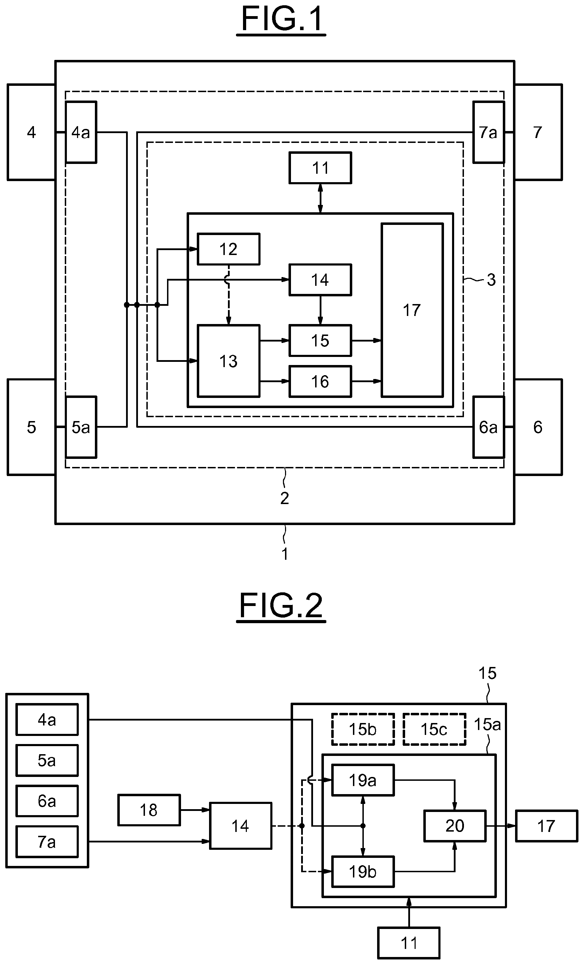

Sur la figure 1, on peut voir un véhicule 1 comprenant un système de surveillance 2 de pression des pneumatiques permettant d'informer les utilisateurs et les autres systèmes du véhicule de l'état des pneumatiques. Le système de surveillance 2 de pression comprend une unité de commande électronique 3 couplée à au moins un capteur 4a,5a,6a,7a situé dans chaque pneumatique 4,5,6,7. Le couplage peut être réalisé par une liaison filaire ou sans fil. Le système de surveillance 2 de pression transmet notamment des informations relatives à la pression d'au moins un des pneumatiques du véhicule, à l'état de sous-gonflement d'au moins un des pneumatiques, à l'état de crevaison d'au moins un des pneumatiques, de la défaillance ou de l'absence d'un capteur de pression d'au moins un des pneumatiques, d'une défaillance du récepteur, ou de l'absence d'au moins une des données nécessaires au fonctionnement du système de surveillance 2 de pression des pneumatiques.

Le système de surveillance 2 de pression est modulaire dans la mesure où d'autres moyens de détermination peuvent être ajoutés pour fournir des informations complémentaires aux informations décrites ci-dessus à partir des données de pression des capteurs 4a,5a,6a,7a et éventuellement de données fournies par d'autres dispositifs du véhicule. Les capteurs 4a,5a,6a,7a fournissent chacun la pression du pneumatique associé, mais également la température voire la vitesse de rotation du pneumatique. D'autres informations peuvent également être communiquées par ces capteurs 4a,5a,6a,7a.

Le système de surveillance 2 de pression comprend un moyen de supervision 11, un moyen de détection 12 des identifiants des roues, un moyen d'association 13 des informations aux roues, un moyen de détermination 14 des seuils de pression, un moyen principal 15, un moyen de diagnostic 16 du système de surveillance, et un moyen d'information 17.

Le moyen de supervision 11 est apte à activer ou désactiver les autres moyens 12,13,14,15,16,17 du système de surveillance 2 de pression.

Il reçoit en entrée les différentes informations de roulage disponibles, notamment la vitesse du véhicule, la charge en kilogrammes du véhicule, l'état d'injection du moteur, ainsi que les différentes informations reçues des différents moyens compris dans le système de surveillance 2 de pression de la pression des pneumatiques.

Pour chaque moyen commandé, le moyen de supervision 11 émet une commande pouvant prendre trois états : moyen activé, moyen désactivé ou moyen remis à zéro.

Le moyen de détection 12 des identifiants des roues reçoit en entrée les informations transmises par les capteurs 4a,5a,6a,7a de roues ainsi que des informations relatives aux conditions de roulage du véhicule.

Le moyen de détection 12 des identifiants des roues est apte à associer un des identifiants de transmission reçus à chacune des roues 4,5,6,7. Pour cela, il associe les identifiants à chaque roue 4,5,6,7 en fonction d'une table de correspondance mémorisée. Alternativement, le moyen de détection 12 des identifiants de roues peut comprendre plusieurs tables de correspondance, chaque table est alors associée à un jeu de pneumatiques différents, par exemple un jeu de pneumatiques pour l'été ou un jeu de pneumatiques pour l'hiver. Alternativement, le moyen de détection 12 des identifiants des roues peut être apte à localiser automatiquement les pneumatiques 4,5,6,7 par apprentissage en corrélant les données disponibles aux signaux reçus.

En sortie, le moyen de détection 12 des identifiants de roues émet un signal d'identification par roue du véhicule, chaque signal d'identification portant la correspondance entre la position de la roue dans le véhicule et l'identifiant de transmission associé. Alternativement, le moyen de détection 12 des identifiants de roues émet un signal de changement associé au signal d'identification indiquant la détection d'un identifiant de transmission ne faisant pas partie des tables de correspondance prédéterminées ou apprises.

Le moyen d'association 13 des informations aux roues reçoit en entrée les informations du moyen de détection 12 des identifiants de roues et les informations transmises par les capteurs 4a,5a,6a,7a de roue. Le moyen d'association émet en sortie les informations transmises par les capteurs 4a,5a,6a,7a de roue associées aux roues correspondantes.

Le moyen de détermination 14 des seuils de pression détermine des seuils de pression pour chaque roue en fonction des températures mesurées pour chaque roue et d'une table de pressions recommandées par le constructeur. Les pressions recommandées sont données à une température de référence, quelle que soit la roue. Pour obtenir les seuils de pression, on applique par exemple la loi de Mariotte aux pressions recommandées en fonction de la température mesurée. Le moyen de détermination émet en sortie un seuil pour chaque roue. Alternativement, les seuils peuvent être calculés pour différentes plages de vitesses, par exemple, un jeu de seuils à basse vitesse et un jeu de seuils à haute vitesse.

Le moyen principal 15 comprend un ensemble de moyens élémentaires aptes chacun à déterminer une situation du véhicule liée à l'état de ses pneumatiques. Les moyens élémentaires peuvent permettre de déterminer par exemple un sous-gonflage, une crevaison, une pression de gonflage inadaptée à un mode de conduite, ou une pression de gonflage inadaptée à la charge du véhicule. Les différents états sont déterminés pour chaque pneumatique.

Chaque moyen élémentaire émet en sortie un signal d'état à deux valeurs, l'une pour un état présent, l'autre pour un état absent. Chaque moyen élémentaire a accès à toutes les données disponibles au système de surveillance 2 de pression de la pression des pneumatiques, notamment aux informations transmises par les capteurs 4a,5a,6a,7a de roue. Les moyens élémentaires correspondent ici aux moyens de détermination 15a,15b,15c d'une alerte et seront décrits plus bas en relation avec la figure 2.

Le moyen de diagnostic 16 du système de surveillance reçoit les informations transmises par les capteurs 4a,5a,6a,7a et les analyse afin de déterminer la présence de discordances dues à des défaillances. Pour cela, le moyen de diagnostic 16 réalise une corrélation entre les informations transmises par les capteurs 4a,5a,6a,7a et les informations reçues d'autres organes. Par exemple, pour déterminer une discordance dans les informations de mouvement, on compare les informations de vitesse reçues d'un dispositif ABS aux informations reçues des capteurs de mouvement de chaque roue.

Les entrées du moyen de diagnostic 16 diffèrent selon les informations dont on souhaite déterminer les discordances. D'une façon générale, le moyen de diagnostic 16 dispose d'un accès à toutes les informations reçues des capteurs 4a,5a,6a,7a de roues, ainsi que des informations disponibles auprès des autres capteurs 4a,5a,6a,7a et moyens d'estimation. Le moyen de diagnostic 16 émet en sortie un signal de défaillance pour chaque capteur 4a,5a,6a,7a de chaque roue. Ce signal peut être notamment un signal booléen à deux états indiquant un capteur défaillant ou un capteur non défaillant.

Le moyen d'information 17 permet de transmettre les informations de défaillance ou d'anomalie des différents moyens à l'unité de commande électronique 3 du véhicule et/ou au conducteur. Dans ce dernier cas, le moyen d'information 17 interagit avec une interface homme machine, tel que le tableau de bord, afin d'informer explicitement le conducteur.

Le moyen principal 15 tel que décrit plus haut en regard de la figure 1 comprend un moyen de détermination 15a d'une alerte de sous-gonflage, un moyen de détermination 15b d'une alerte de crevaison, et un moyen de détermination 15c d'une alerte de pression inadaptée aux vitesses élevées.

La figure 2 illustre notamment l'interaction entre le moyen de détermination 14 des seuils de pression et le moyen de détermination 15a d'une alerte de sous-gonflage. L'interaction entre le moyen de détermination 14 des seuils de pression et le moyen de détermination 15b d'une alerte de crevaison, ou le moyen de détermination 15c d'une alerte de pression inadaptée aux vitesses élevées sont similaires. Dans un souci de brièveté et de concision de la description, ces interactions ne sont ni décrites, ni illustrées. Néanmoins elles dérivent directement de la description de l'interaction entre le moyen de détermination 14 des seuils de pression et un moyen de détermination 15a d'une alerte de sous-gonflage.

Comme on peut le voir, le moyen de détermination 14 des seuils de pression est relié en entrée aux capteurs 4a,5a,6a,7a de roues ainsi qu'à une cartographie 18 des pressions et températures de référence des pneumatiques. Le moyen de détermination 15a d'une alerte est également connecté aux capteurs 4a,5a,6a,7a de roues ainsi qu'à la sortie du moyen de détermination 14 des seuils de pression.

Le moyen de détermination 14 des seuils de pression et les capteurs 4a,5a,6a,7a peuvent être connectés en parallèle à d'autres moyens de détermination 15b, 15c non représentés ici.

Le moyen de détermination 15a d'une alerte comprend un moyen de comptage 19a d'habilitation et à un moyen de comptage 19b de réhabilitation. Le moyen de comptage 19a d'habilitation et le moyen de comptage 19b de réhabilitation sont tous deux connectés en entrée aux capteurs 4a,5a,6a,7a de roues. Le moyen de comptage 19a d'habilitation et le moyen de comptage 19b de réhabilitation sont tous deux connectés en sortie à un moyen d'estimation 20 d'une alerte. Le moyen d'estimation 20 d'une alerte est connecté en sortie au moyen d'information 17.

Enfin, le moyen de détermination 15a d'une alerte de sous-gonflage est connecté au moyen de supervision 11 afin de recevoir des commandes d'activation, de désactivation ou de remise à zéro.

Les moyens de détermination 15a,15b,15c d'une alerte déterminent l'occurrence de leur état associé en comparant les informations transmises par les capteurs 4a,5a,6a,7a de roue aux seuils de pression déterminés par le moyen de détermination 14 des seuils de pression. Par état associé, on entend par exemple sous-gonflage, crevaison, ou pression inadaptée aux hautes vitesses. Le moyen de détermination 14 permet de déterminer des seuils de pressions qualifiés de bas, moyen et haut. Un nombre plus élevé de graduations peut être considéré. Les moyens de détermination 15a,15b,15c d'une alerte comparent ainsi les pressions de pneumatiques aux différents seuils disponibles afin d'affecter à chaque pneumatique une graduation de l'état de la pression (bas, moyen, haut) en fonction de la comparaison de la pression du pneumatique avec les seuils de pression qualifiés de bas, moyen ou haut.

La détermination des seuils de pression par le moyen de détermination 14 des seuils de pression sera décrite ci-après. De plus, les capteurs 4a,5a,6a,7a émettent les valeurs de pression conjointement avec les températures correspondantes. Il est alors possible d'effectuer des comparaisons avec des seuils de pression qui ne seraient pas déterminés pour la même température. Cela fait l'objet d'un deuxième mode de réalisation du moyen de détermination 14 des seuils de pression, décrit également plus bas.

En se référant à nouveau au moyen de détermination 14 des seuils de pression, on va décrire comment il est possible de déterminer de simples seuils de pression ou des seuils de pression dépendant de la température.

Selon un premier mode de réalisation, les seuils de pression sont déterminés en prenant en compte la valeur maximale entre la valeur issue d'une composante fixe et la valeur issue d'une composante variable. La composante fixe correspond à un seuil minimum en valeur absolue. La partie bornée inférieurement correspond à un seuil fixe garantissant une limite de tenue mécanique de rupture du pneumatique dans le cas de la crevaison.

La composante variable correspond à un pourcentage d'une pression recommandée à une température de référence.

Les seuils de pression sont déterminés pour une température de référence Afin de comparer convenablement les pressions des pneumatiques aux seuils de pression, on doit pouvoir disposer d'une température commune. En d'autres termes, on ne peut comparer deux pressions qu'à température donnée. Pour cela, on applique la formule de Mariotte, ou formule des gaz parfaits :

$$PV = nRT \qquad\qquad (Eq.\ 1)$$

Avec

P : la pression
V : le volume
n : nombre de moles du gaz
R : la constante des gaz parfaits
T : la température absolue.

Lorsque l'on maintient le volume, et le nombre de moles de gaz constant, on obtient l'équation suivante :

$$\frac{P}{T} = \frac{nR}{V} = Cte \qquad\qquad (Eq.\ 2)$$

Le pneumatique se comportant comme une enceinte fermée, le volume de gaz est constant, tout comme la quantité de matière associée, représentée par le nombre de moles de gaz. On peut donc lui appliquer l'équation 2.

On obtient alors la formule suivante :

$$P\_Seuil = \frac{P_{Ref} + P_{Atmos}}{T_{Ref}} \cdot T_{Pneu} - P_{Atmos} \qquad\qquad (Eq.\ 3)$$

$P_{\_Seuil}$ : Seuil de pression
$P_{Ref}$ : La température de référence
$P_{Atmos}$ : La pression atmosphérique extérieure

$T_{Ref}$ : La température de référence en Kelvin

$T_{Pneu}$ : Température du pneumatique en Kelvin

Les pressions et températures référencées ci-dessus peuvent être mesurées ou estimées.

A partir de l'équation 3, on détermine les seuils de pression corrigés en fonction de la température. Comme on l'a vu dans le premier mode de réalisation, il existe un seuil de pression bas, moyen et haut. En fonction de ces trois seuils, on obtient trois seuils de pression qualifiés chacun de bas, moyen ou haut et corrigés en fonction de la température.

Pour le seuil de pression bas, on peut choisir une partie constante de la pression de seuil égale à 1600mbar et une partie variable égale à 20% de la pression.

Pour le seuil de pression moyen, on peut choisir une partie constante de la pression de seuil égale à 1700mbar et une partie variable égale à 15% de la pression.

Pour le seuil de pression haut, on peut choisir une partie constante de la pression de seuil égale à 1800mbar et une partie variable égale à 7% de la pression.

Pour une pression de référence de 2200mbar, une température de référence de 293K (soit 20°C), une pression atmosphérique de 1013mbar et une température de pneumatique de 313K (soit 40°C), et en appliquant l'équation 2, on obtient un seuil de pression bas corrigé de 1733mBar, un seuil de pression moyen corrigé de 1905mBar, et un seuil de pression haut corrigé de 2076mBar.

En disposant de ces seuils de pression, corrigés ou non, il est possible de déterminer si la pression des pneumatiques reçue d'un capteur est basse, moyenne ou haute.

Par exemple, si à une température donnée, la pression mesurée est comprise entre les seuils de pression corrigés bas et moyen, la pression mesurée est qualifiée de moyenne.

Si à une autre température, la pression mesurée est inférieure à au seuil de pression corrigé bas, la pression mesurée est qualifiée de basse.

On dispose ainsi d'un autre mode de réalisation dans lequel les seuils de pression sont corrigés en fonction de la température associée à la pression mesurée ou estimée afin de rester en accord avec la loi de Mariotte mais également avec la pression relative extérieure pouvant être un paramètre fixe ou adaptatif (variable). Les seuils de pression corrigés s'ajustent donc au couple pression-température à évaluer. Dans cette alternative, le moyen de détermination 14 des seuils de pression transmet des seuils de pression corrigés en fonction de la température du pneumatique.

Les trois seuils de pression corrigés sont calculés en temps réel en appliquant l'équation 3 aux informations issues de la cartographie 18 comprenant les pressions recommandées par les fournisseurs de pneumatiques et les températures de référence associées, ainsi qu'à la pression atmosphérique relative (mesurée, estimée ou paramétrée), à la pression et à la température des pneumatiques (mesurées ou estimées) et à la composante fixe et à la composante variable des seuils de pressions définis dans le premier mode de réalisation.

Comme cela a été décrit précédemment, le moyen de détermination 15a d'une alerte comprend un moyen de comptage d'habilitation 19a, un moyen de comptage de réhabilitation 19b et un moyen d'estimation 20 d'une alerte.

Le moyen de détermination 15a d'une alerte émet ou retire une alerte en fonction des valeurs du moyen de comptage d'habilitation 19a et du moyen de comptage de réhabilitation 19b.

Le moyen de comptage d'habilitation 19a comptabilise des évènements menant à l'émission d'une alerte, tandis que le moyen de comptage de réhabilitation 19b comptabilise des évènements menant au retrait d'une alerte.

Chaque moyen de détermination 15a,15b,15c d'une alerte (sous-gonflage, crevaison, et pression inadaptée aux vitesses élevées) peut bénéficier d'un moyen de comptage d'habilitation 19a et d'un moyen de comptage de réhabilitation 19b indépendants ou communs aux moyens de détermination 15a,15b,15c d'une alerte. Par la suite, le système est décrit en tenant compte de compteurs totalement indépendants. Toutefois, il est évident de modifier le système de sorte que chaque compteur soit utilisé en commun par les moyens de détermination d'une alerte.

Le moyen de comptage d'habilitation 19a et le moyen de comptage de réhabilitation 19b comprennent chacun un compteur interne, respectivement un compteur d'habilitation et un compteur de réhabilitation, qui sont incrémentés ou réduits en fonction de l'évolution de la pression des pneumatiques et en fonction de règles prédéterminées de comparaison de la pression des pneumatiques aux seuils émis par le moyen de détermination 14 des seuils de pression. D'une manière simplifiée, on pourra considérer qu'un changement de pression entraînant l'incrémentation du compteur du moyen de comptage d'habilitation 19a entraînera la diminution du compteur du moyen de comptage de réhabilitation 19b. Des exemples de règles sont donnés plus loin.

Les règles de comparaison peuvent comprendre des seuils différents pour chaque compteur menant à l'émission ou au retrait d'une alerte. On peut ainsi rendre l'émission d'une alerte plus ou moins sévère que le retrait de cette même alerte. Par exemple, on peut fixer que, pour une roue donnée, une alerte soit émise au bout de cinq relevés de pressions identifiés comme symptomatiques d'une crevaison et retirer l'alerte seulement au bout de dix relevés de pressions identifiés comme symptomatiques de l'absence d'une crevaison.

Dans le cas où le moyen de détermination 14 des seuils de pression permet de déterminer trois seuils de pressions qualifiés de bas, moyen et haut, les trois seuils de pression permettent de déterminer quatre zones différentes.

Pour chacune de ces zones, il y aura deux comportements différents selon que le compteur associé est un moyen de comptage d'habilitation 19a ou de réhabilitation 19b. Le tableau suivant résume les différentes règles de comparaison pour chacune des quatre zones de pression, pour le moyen de comptage d'habilitation 19a et le moyen de comptage de réhabilitation 19b.

|  | Compteur d'habilitation | Compteur de réhabilitation |
|---|---|---|
| P_mes > P_Seuil_Haut | Fixe le compteur à zéro | Incrémente le compteur de 1 |
| P_ Seuil _Moy < P_mes < P_ Seuil _Haut | Décrémente le compteur de 1 | Ne fait rien, zone incertaine |
| P_ Seuil _Bas < P_mes < P_Seuil _Moy | Ne fait rien, zone incertaine | Décrémente le compteur de 1 |
| P_mes < P_ Seuil _Bas | Incrémente le compteur de 1 | Fixe le compteur à zéro |

Avec P_mes : la pression mesurée ou estimée du pneumatique
P_Seuil_Haut : le seuil de pression haut
P_Seuil _Moy : le seuil de pression moyen
P_ Seuil _Bas : le seuil de pression bas

Le moyen d'estimation 20 d'une alerte permet d'émettre une alerte en fonction des niveaux du moyen de comptage d'habilitation 19a et du moyen de comptage de réhabilitation 19b.

Pour cela, on fixe un seuil maximal pour chaque moyen de comptage d'habilitation 19a et pour chaque moyen de comptage de réhabilitation 19b.

Si le seuil maximal du moyen de comptage d'habilitation 19a est atteint et que le seuil de réhabilitation est nul, on émet une alerte.

Au contraire, si le seuil maximal du moyen de comptage de réhabilitation 19b est atteint et que le moyen de comptage d'habilitation 19a est nul, l'alerte est retirée.

Des états transitoires peuvent être définis afin d'identifier des situations spécifiques. On peut par exemple, définir l'émission d'une alerte lorsque le moyen de comptage d'habilitation 19a atteint une valeur alors que le moyen de comptage de réhabilitation 19b atteint une autre valeur.

Les alertes sont émises à destination du moyen d'information 17 qui le retransmet au conducteur et/ou aux autres organes du véhicule.

**Revendications**

1. Système de surveillance de pression des pneumatiques d'un véhicule automobile comprenant au moins un capteur (4a,5a,6a,7a) situé dans au moins un pneumatique (4,5,6,7), le système de surveillance comprenant également un moyen principal (15) apte à déterminer un état de chaque pneumatique (4,5,6,7) muni d'un capteur, parmi une crevaison, un sous-gonflage et une pression inadaptée aux hautes vitesses, en fonction de la comparaison de la pression de chaque pneumatique avec des seuils de pression relatifs à chaque état, **caractérisé en ce que** le moyen principal (15) comprend au moins un moyen de détermination (15a,15b,15c) d'une alerte pour chaque état, chaque moyen de détermination d'une alerte comprenant un moyen de comptage (19a) d'habilitation et à un moyen de comptage (19b) de réhabilitation, tous deux connectés en entrée aux capteurs (4a,5a,6a,7a) de roues et à un moyen de détermination (14) des seuils de pression, et en sortie à un moyen d'estimation (20) d'une alerte,
le moyen de comptage (19a) d'habilitation et le moyen de comptage (19b) de réhabilitation étant aptes chacun à incrémenter ou réduire un compteur des évènements menant, pour le moyen de comptage (19a) d'habilitation, à l'émission d'une alerte, et pour le moyen de comptage de réhabilitation 19b, des évènements menant au retrait d'une alerte, en fonction de règles prédéterminées de comparaison de la pression du pneumatique et des seuils de pression,
le moyen d'estimation (20) d'une alerte étant apte à émettre une alerte en fonction de la comparaison des valeurs du moyen de comptage (19a) d'habilitation et du moyen de comptage (19b) de réhabilitation à des valeurs prédéterminées.

2. Système de surveillance selon la revendication 1, dans lequel le moyen de détermination (14) des seuils de pression est apte à déterminer au moins un seuil de pression pour chaque état, en fonction d'une température de référence et d'une pression de référence prédéterminées.

3. Système de surveillance selon l'une quelconque des revendications 1 ou 2, dans lequel le moyen de détermination (14) des seuils de pression est également apte à corriger lesdits seuils de pression en fonction d'une mesure de la température du pneumatique.

4. Système de surveillance selon l'une quelconque des revendications précédentes, comprenant un moyen de détection (12) des identifiants des roues et un moyen d'association (13) des informations aux roues, aptes à associer les informations reçues des capteurs (4a,5a,6a,7a) avec la roue correspondante.

5. Système de surveillance selon l'une quelconque des revendications 1 à 4, dans lequel le moyen de comptage (19a) d'habilitation et le moyen de comptage (19b) de réhabilitation sont communs à au moins deux moyens de détermination (15a,15b,15c) d'une alerte.

6. Procédé de surveillance de pression des pneumatiques d'un véhicule automobile, comprenant les étapes suivantes :

on mesure la pression d'au moins un pneumatique,
on détermine un état de chaque pneumatique parmi une crevaison, un sous-gonflage et une pression inadaptée aux hautes vitesses en fonction de la comparaison de la pression de chaque pneumatique avec des seuils de pression relatifs à chaque état,
on émet une alerte si l'un des états est vérifié, **caractérisé par le fait que**,
pour chaque état,
on détermine des seuils de pression correspondant chacun à une graduation de l'état de la pression dans le pneumatique,
on incrémente ou on réduit un compteur d'habilitation et un compteur de réhabilitation en comparant les pressions de pneumatiques aux différents seuils de pression déterminés, et
on détermine une alerte liée à un état d'un pneumatique en fonction de la comparaison des valeurs du compteur d'habilitation et du compteur de réhabilitation à des valeurs prédéterminées.

7. Procédé de surveillance selon la revendication 6, dans lequel on détermine des seuils de pression en prenant en compte la valeur maximale entre la valeur issue d'une composante fixe et la valeur issue d'une composante variable.

8. Procédé de surveillance selon la revendication 7, dans lequel la composante fixe correspond à un seuil minimum en valeur absolue.

9. Procédé de surveillance selon la revendication 7, dans lequel la composante variable correspond à un pourcentage d'une pression recommandée à une température de référence.

10. Procédé de surveillance selon l'une quelconque des revendications 8 à 9, dans lequel on corrige les seuils de pression en fonction de la température associée à la pression mesurée ou estimée des pneumatiques.

11. Procédé de surveillance selon l'une quelconque des revendications 6 à 10, dans lequel on détermine des états transitoires entre des états d'alerte en fonction des valeurs du compteur d'habilitation et du compteur de réhabilitation et de règles prédéfinies.

**Patentansprüche**

1. System zur Überwachung des Reifendrucks eines Kraftfahrzeugs, umfassend mindestens einen Sensor (4a, 5a, 6a, 7a), der in mindestens einem Reifen (4, 5, 6, 7) angeordnet ist, wobei das System zur Überwachung auch ein Hauptinstrument (15), das mit einem Sensor versehen ist, das in der Lage ist, einen Zustand jedes Reifens (4, 5, 6, 7) aus einer Reifenpanne, einem zu niedrigen Reifendruck und einem Druck, der nicht für hohe Geschwindigkeiten geeignet ist, in Abhängigkeit von dem Vergleich des Drucks jedes Reifens mit Druckschwellenwerten für jeden Zustand zu bestimmen, **dadurch gekennzeichnet, dass** das Hauptinstrument (15) mindestens ein Instrument zur Bestimmung (15a, 15b, 15c) eines Alarmsignals für jeden Zustand umfasst,
wobei jedes Instrument zur Bestimmung eines Alarmsignals ein Instrument zur Zählung (19a) der Zulassung und ein Instrument zur Zählung (19b) der Wiederzulassung umfasst, wobei beide am Eingang mit den Sensoren (4a, 5a, 6a, 7a) der Räder und mit einem Instrument zur Bestimmung (14) der Druckschwellenwerte und am Ausgang mit einem Instrument zur Schätzung (20) eines Alarmsignals verbunden sind,
wobei das Instrument zur Zählung (19a) der Zulassung und das Instrument zur Zählung (19b) der Wiederzulassung jeweils geeignet sind, einen Ereigniszähler zu erhöhen oder zu reduzieren, was für das Instrument zur Zählung (19a) der Zulassung zum Senden eines Alarmsignals führt, und für das Instrument zur Zählung der Wiederzulassung 19b der Ereignisse zur Aufhebung eines Alarmsignals führt, in Abhängigkeit von vorbestimmten Regeln zum Vergleich des Reifendrucks mit Druckschwellenwerten,

wobei das Instrument zur Schätzung (20) eines Alarmsignals in der Lage ist, ein Alarmsignal in Abhängigkeit vom Vergleich der Werte des Instruments zur Zählung (19a) der Zulassung und des Instruments zur Zählung (19b) der Wiederzulassung mit vorbestimmten Werten zu senden.

2. System zur Überwachung nach Anspruch 1, wobei das Instrument zur Bestimmung (14) der Druckschwellenwerte in der Lage ist, in Abhängigkeit von einer vorbestimmten Referenztemperatur und einem vorbestimmten Referenzdruck mindestens einen Druckschwellenwert für jeden Zustand zu bestimmen.

3. System zur Überwachung nach einem der Ansprüche 1 oder 2, wobei das Instrument zur Bestimmung (14) der Druckschwellenwerte auch in der Lage ist, die Druckschwellenwerte in Abhängigkeit von einer Messung der Temperatur des Reifens zu korrigieren.

4. System zur Überwachung nach einem der vorhergehenden Ansprüche, umfassend ein Instrument zum Erfassen (12) der Kennungen der Räder und ein Instrument zur Assoziation (13) der Informationen zu den Rädern, die in der Lage sind, die von den Sensoren (4a, 5a, 6a, 7a) erhaltenen Informationen mit dem entsprechenden Rad zu assoziieren.

5. System zur Überwachung nach einem der Ansprüche 1 bis 4, wobei das Instrument zur Zählung (19a) der Zulassung und das Instrument zur Zählung (19b) der Wiederzulassung mindestens zwei Instrumenten zur Bestimmung (15a, 15b, 15c) eines Alarmsignals gemeinsam sind.

6. Verfahren zur Überwachung des Reifendrucks eines Kraftfahrzeugs, das die folgenden Schritte umfasst:

Messen des Drucks mindestens eines Reifens,
Bestimmen eines Zustands jedes Reifens aus einer Reifenpanne, einem zu niedrigen Reifendruck und einem Druck, der nicht für hohe Geschwindigkeiten geeignet ist, in Abhängigkeit von dem Vergleich des Reifendrucks jedes Reifens mit Druckschwellenwerten für jeden Zustand,
Senden eines Alarmsignals, wenn einer der Zustände überprüft ist, **dadurch gekennzeichnet, dass** für jeden Zustand,
Druckschwellenwerte bestimmt werden, die jeweils einer Einstufung des Zustands des Drucks in dem Reifen entsprechen,
ein Zähler der Zulassung und ein Zähler der Wiederzulassung erhöht oder reduziert wird, indem die Reifendrücke mit verschiedenen bestimmten Druckschwellenwerten verglichen werden, und
ein Alarmsignal bestimmt wird, das mit einem Zustand eines Reifens in Abhängigkeit von dem Vergleich der Werte des Zählers der Zulassung und des Zählers der Wiederzulassung mit vorbestimmten Werten verbunden ist.

7. Verfahren zur Überprüfung nach Anspruch 6, wobei Druckschwellenwerte unter Berücksichtigung des Maximalwerts zwischen dem Wert, der aus einer festen Komponente stammt, und dem Wert, der aus einer variablen Komponente stammt, bestimmt werden.

8. Verfahren zur Überprüfung nach Anspruch 7, wobei die feste Komponente einem Minimalschwellenwert in absoluten Zahlen entspricht.

9. Verfahren zur Überprüfung nach Anspruch 7, wobei die variable Komponente einem Prozentsatz eines empfohlenen Drucks bei einer Referenztemperatur entspricht.

10. Verfahren zur Überprüfung nach einem der Ansprüche 8 bis 9, wobei die Druckschwellenwerte in Abhängigkeit von der Temperatur korrigiert werden, die mit dem gemessenen oder geschätzten Reifendruck assoziiert ist.

11. Verfahren zur Überprüfung nach einem der Ansprüche 6 bis 10, wobei Übergangszustände zwischen Alarmzuständen in Abhängigkeit von Werten des Zählers der Zulassung und des Zählers der Wiederzulassung und vordefinierten Regeln bestimmt werden.

**Claims**

1. System for monitoring the pressure of the tyres of a motor vehicle comprising at least one sensor (4a, 5a, 6a, 7a) situated in at least one tyre (4, 5, 6, 7), the monitoring system also comprising a main means (15) capable of determining a state of each tyre (4, 5, 6, 7) provided with a sensor, out of a puncture, an under inflation and a pressure unsuited to high speeds, based on the comparison of the pressure of each tyre with pressure thresholds relative to each state, **characterized in that** the main means (15) comprises at least one means for determining (15a, 15b, 15c) an alert for each state, each means for determining an alert comprising an authorization counting means (19a) and a re-authorization counting means (19b), both connected at the input to the sensors (4a, 5a, 6a, 7a) of wheels and to a means for determining (14) pressure thresholds, and at the output to an alert estimation means (20),
the authorization counting means (19a) and the re-authorization counting means (19b) each being capable of incrementing or decrementing a counter of the events leading, for the authorization counting means (19a), to the emission of an alert, and for the re-authorization counting means (19b), of the events leading to the removal of an alert, based on predetermined rules of comparison of the pressure of the tyre and of the pressure thresholds,
the alert estimation means (20) being capable of emitting an alert based on the comparison of the values of the authorization counting means (19a) and of the re-authorization counting means (19b) to predetermined values.

2. Monitoring system according to Claim 1, in which the means for determining (14) pressure thresholds is capable of determining at least one pressure threshold for each state, based on a reference temperature and a reference pressure that are predetermined.

3. Monitoring system according to either one of Claims 1 or 2, in which the means for determining (14) pressure thresholds is also capable of correcting said pressure thresholds based on a measurement of the temperature of the tyre.

4. Monitoring system according to any one of the preceding claims, comprising a means for detecting (12) identifiers of the wheels and a means for associating (13) information with the wheels, capable of associating the information received from the sensors (4a, 5a, 6a, 7a) with the corresponding wheel.

5. Monitoring system according to any one of Claims 1 to 4, in which the authorization counting means (19a) and the re-authorization counting means (19b) are common to at least two alert determination means (15a, 15b, 15c).

6. Method for monitoring the pressure of the tyres of a motor vehicle, comprising the following steps:

   the pressure of at least one tyre is measured,
   a state of each tyre is determined out of a puncture,
   an under inflation and a pressure unsuited to high speeds based on the comparison of the pressure of each tyre with pressure thresholds relative to each state,
   an alert is emitted if one of the states is verified, **characterized by** the fact that,
   for each state,
   pressure thresholds are determined, each corresponding to a graduation of the state of the pressure in the tyre,
   an authorization counter and a re-authorization counter are incremented or decremented by comparing the tyre pressures to the different determined pressure thresholds, and
   an alert linked to a state of a tyre is determined based on the comparison of the values of the authorization counter and of the re-authorization counter to predetermined values.

7. Monitoring method according to Claim 6, in which pressure thresholds are determined by taking into account the maximum value between the value deriving from a fixed component and the value deriving from a variable component.

8. Monitoring method according to Claim 7, in which the fixed component corresponds to a minimum threshold as absolute value.

9. Monitoring method according to Claim 7, in which the variable component corresponds to a percentage of a pressure recommended at a reference temperature.

10. Monitoring method according to either one of Claims 8 and 9, in which the pressure thresholds are corrected based on the temperature associated with the measured or estimated pressure of the tyres.

11. Monitoring method according to any one of Claims 6 to 10, in which transient states between alert states are determined based on the values of the authorization counter and of the re-authorization counter and on predefined rules.

# FIG.1

# FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2916564
- FR 2844748
- GB 2443302 A
- WO 2007012771 A2